# FASCICULE DE BREVET EUROPEEN

(11) **EP 2 776 699 B1**
(45) Date de publication et mention de la délivrance du brevet: **14.10.2015**
(21) Numéro de dépôt: 12787790.0
(22) Date de dépôt: 22.10.2012
(51) Int. Cl.: F02K 1/72

(54) **DISPOSITIF D'INVERSION DE POUSSÉE**
SCHUBUMKEHRVORRICHTUNG
THRUST REVERSER DEVICE

(30) Priorité: 07.11.2011 FR 1160055
(43) Date de publication de la demande: 17.09.2014
(73) Titulaire: Aircelle, 76700 Gonfreville l'Orcher (FR)
(72) Inventeur: PEYRON, Vincent, F-76620 Le Havre (FR)
(74) Mandataire: Gaillarde, Frédéric F. Ch.
(86) Numéro de dépôt international: PCT/FR2012/052408
(87) Numéro de publication internationale: WO 2013/068663

(56) Documents cités:
- FR-A- 1 466 840
- FR-A1- 2 379 705
- FR-A1- 2 952 128
- GB-A- 2 045 179
- US-A1- 2005 151 012

## Description

L'invention concerne un inverseur de poussée, dit à grilles, pour un moteur à réaction.

Un avion est mû par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'inversion de poussée.

Une nacelle présente généralement une structure tubulaire comprenant une entrée d'air en amont du turboréacteur, une section médiane destinée à entourer une soufflante du turboréacteur, une section aval abritant les moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à générer par l'intermédiaire des pales de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots peuvent remplir une fonction de déviation ou simplement d'activation d'autres moyens de déviation.

Dans le cas d'un inverseur à grilles, la réorientation du flux d'air est effectuée par des grilles de déviation, le capot n'ayant qu'une simple fonction de coulissage visant à découvrir ou recouvrir ces grilles. Des portes de blocage complémentaires, également appelées volets, activées par le coulissement du capotage, permettent généralement une fermeture de la veine en aval des grilles de manière à permettre la réorientation du flux froid vers les grilles.

Ces volets sont montés pivotants sur le capot coulissant entre une position rétractée dans laquelle ils assurent, avec ledit capot mobile, la continuité aérodynamique de la paroi interne de la nacelle et une position déployée dans laquelle, en situation d'inversion de poussée, ils viennent obturer au moins partiellement le canal annulaire en vue de dévier un flux de gaz vers les grilles de déviation découvertes par le coulissement du capot mobile.

Le pivotement des volets est guidé par des biellettes rattachées, d'une part, au volet, et d'autre part, à un point fixe de la structure interne délimitant le canal annulaire.

Une telle configuration de l'art antérieur présente plusieurs problèmes, à savoir notamment, des problèmes de cinématiques d'ouverture différentes entre la translation du capotage et le pivotement des volets, des problèmes de perturbations aérodynamiques dus aux biellettes d'entraînement traversant la veine, des problèmes de performances acoustiques dus à l'installation de points fixes d'articulation qui réduit la surface de la structure interne pouvant être utilisée pour un traitement acoustique et des problèmes mécaniques du fait de la liaison mécanique par les biellettes entre l'inverseur de poussée et la structure interne.

La problématique de la cinématique du degré d'ouverture des volets par rapport au coulissement du capot et par conséquent, de la gestion de la section totale de passage de l'air est un point particulièrement important.

En effet, lors d'une phase de transition entre ouverture et fermeture de l'inverseur de poussée, l'ouverture des volets, en début de phase d'ouverture du capot mobile, est plus rapide que le recul dudit capot.

Il existe souvent un point sensible de cinématique qui place le volet en position d'obstruction partielle du canal annulaire sans que la section obstruée soit complètement compensée par la section amont découverte par le recul du capot mobile.

La section amont de passage à travers les grilles de l'inverseur étant inférieure à la section de la veine qui est obstruée par les volets, il s'ensuit une augmentation de la pression dans le moteur, ce qui implique une gestion délicate du régime du turboréacteur dans cette phase transitoire.

Plusieurs solutions ont été mises en place de manière à résoudre un ou plusieurs de ces problèmes.

Ainsi, il est connu de proposer une architecture d'inverseur ne comprenant plus de bielle traversant le canal annulaire.

Par exemple, on peut atteindre cet objectif en prévoyant des bielles d'entrainement articulées sur le volet mobile et reliées à proximité du cadre arrière des grilles de déviation. Une telle solution est décrite dans les documents US 5 228 641 et US 2007/0234707 par exemple.

Or, une telle architecture est inadaptée aux turboréacteurs à fort taux de dilution.

En effet, avec ce type de turboréacteur, la longueur des grilles et, par conséquent, le déplacement du capot vers l'aval de la nacelle pour les découvrir, doivent être importants.

Or, en raison d'un manque d'espace disponible dans la nacelle, la longueur des bielles ne peut être suffisante pour réaliser une cinématique d'ouverture adaptée pour les volets et le capot.

Il s'ensuit que le volet se déploie très rapidement dans le canal annulaire dès le début de la course de recul du capot coulissant, entraînant une augmentation conséquente de pression dans le canal annulaire.

Il ne résout donc pas le problème de la gestion adéquate de la section totale de passage de l'air dans la nacelle.

En outre, un tel système pose des problèmes d'étanchéité de la veine, le diaphragme d'étanchéité devant être placé au dessus des grilles de déviation. Cela implique notamment de faire transiter les efforts s'exerçant sur les volets à travers des ferrures glissant entre deux grilles, ce qui alourdit la structure et la rend plus complexe à réaliser.

On connaît également d'autres dispositifs qui permettent d'adapter la cinématique d'ouverture du volet par rapport à celle du recul du capot, notamment en mettant en oeuvre un certain retard à l'ouverture du volet, empêchant ainsi une augmentation de pression dans la veine.

Toutefois, l'inconvénient inverse se produit, la section amont de passage d'air à travers les grilles de l'inverseur, ajoutée à celles des deux flux en jet direct étant trop importante par rapport à la section d'entrée d'air de la nacelle. Une telle situation est également préjudiciable au turboréacteur.

Par ailleurs, d'autres dispositifs proposant une architecture sans bielle dans la veine prévoient des volets coulissant le long de rails adaptés via des galets, le long du capot mobile lors de son déplacement en aval de la nacelle.

Or, ces dispositifs présentent des insuffisances d'un point de vue fiabilité mécanique car ils sont sujets à l'usure des parties mobiles, telles que les galets, les efforts étant appliqués ponctuellement sur des surfaces de contacts très petites.

Par conséquent, il existe un besoin d'amélioration des dispositifs d'inversion de poussée sans bielle dans le canal annulaire afin de pallier les limitations évoquées précédemment. Ces solutions doivent notamment permettre un entraînement isostatique des volets, c'est-à-dire qu'à une position du capot mobile de l'inverseur de poussée correspond une position du volet, et utiliser des jonctions classiques entre les éléments mécaniques ne nécessitant pas de contact ponctuels ou linéiques (façon rouleaux ou billes) afin de limiter l'usure des parties mobiles.

Une première solution a été développée et décrite dans la demande FR 2 952 128 au nom de la demanderesse.

Le document FR 2 952 128 décrit un tel dispositif d'inversion de poussée équipé d'au moins un volet de blocage monté pivotant par une extrémité sur le capot mobile et associé à un système d'entraînement comprenant au moins un ensemble formant levier monté pivotant sur le capot et articulé à chacune de ses extrémités, par l'intermédiaire de bielles d'entraînement, respectivement sur le volet et sur une structure fixe du dispositif.

Un tel dispositif permet de s'affranchir des bielles d'entrainement de volet mises en place dans la veine et la cinématique d'ouverture du volet et du capot est maîtrisée afin de présenter une section d'échappement d'air dans la nacelle quasi constante notamment lorsque le dispositif d'inversion de poussée est dans une configuration de début de transit dans laquelle l'ouverture des moyens de déviation par translation du capot mobile est faible.

Pour ce faire la présente invention se rapporte à un dispositif d'inversion de poussée pour nacelle de turboréacteur comprenant au moins un capot monté mobile en translation selon une direction sensiblement parallèle à un axe longitudinal de la nacelle entre une position de fermeture dans laquelle il assure la continuité aérodynamique de la nacelle et couvre des moyens de déviation d'au moins une partie d'un flux d'air du turboréacteur, et une position d'ouverture dans laquelle il ouvre un passage dans la nacelle et découvre lesdits moyens de déviation, le capot mobile étant associé à au moins un volet de blocage monté pivotant par une extrémité sur le capot mobile entre une position rétractée correspondant à la position de fermeture dudit capot mobile et une position pivotée de blocage correspondant à la position d'ouverture du capot mobile et dans laquelle il vient obturer au moins partiellement une veine de circulation d'air de la nacelle, le volet de blocage étant équipé d'au moins un mécanisme d'entraînement comprenant au moins un ensemble formant levier monté pivotant sur le capot et articulé à chacune de ses extrémités, par l'intermédiaire de bielles d'entraînement, respectivement sur le volet et sur une structure fixe du dispositif, caractérisé en ce que l'ensemble formant levier et les bielles associées sont articulées dans un plan sensiblement perpendiculaire au volet et sensiblement radial du dispositif d'inversion de poussée.

Ainsi, en prévoyant une articulation et une disposition des éléments d'entraînement dans un plan sensiblement perpendiculaire au volet, il est possible de réduire grandement l'encombrement et la complexité du système d'entraînement tout en conservant les avantages mentionnés précédemment.

De manière préférentielle, l'ensemble formant levier comprend un premier et un second bras de levier chacun respectivement fixé, par l'intermédiaire de bielles d'entraînement, sur un cadre avant et sur le volet et montés pivotant sur le capot.

De manière préférentielle, lorsque le dispositif d'inversion de poussée est en position d'ouverture et le volet en position pivotée de blocage, le levier forme avec la bielle d'entraînement rattachée à la structure fixe du dispositif, un angle sensiblement égal à 160 degrés.

Il a en effet été constaté qu'une telle géométrie permettait d'obtenir une rotation du levier la plus importante possible. Ceci se traduit par une rotation plus lente du volet de blocage ce qui permet d'assurer un rapport des surfaces de jet inversé et de jet direct le plus proche possible de l'unité.

Une telle géométrie permet en outre de conserver une marge d'alignement de la première bielle reliée à la structure fixe et du levier. En effet, dans le cas d'un alignement parfait de ces deux éléments, le mécanisme serait susceptible de se retrouver dans une position instable interdisant la refermeture à l'issue de la phase d'inversion de poussée.

De manière avantageuse, l'angle est obtenu en prévoyant une longueur de levier sensiblement égal à la moitié de la course du capot mobile entre sa position de fermeture et sa position d'ouverture.

Préférentiellement, la tolérance de longueur de levier est comprise entre 5 et 10 mm.

Avantageusement, au moins une partie des éléments de levier et bielles du mécanisme d'entraînement sont aptes à s'imbriquer les uns dans les autres lorsque le volet est en position rétractée. Cela pourra notamment être obtenu par dédoublement d'une ou plusieurs bielles ou levier en biellettes sensiblement parallèles entre elles. Ainsi, en position repliée, le levier ou la bielle associée pourra venir se loger entre les biellettes.

Selon une premier mode de réalisation, le plan d'articulation du mécanisme d'entrainement comprend un axe médian du volet.

Avantageusement, le volet est en position rétractée, le mécanisme d'entraînement est replié et logé sensiblement dans le plan du volet au niveau de l'axe médian dudit volet. On pourra le cas échéant prévoir un carénage articulé ou clapet venant recouvrir le logement et assurant l'optimisation aérodynamique de la surface intérieure du volet lorsqu'en position rétractée.

Selon un deuxième mode de réalisation, le mécanisme d'entraînement est situé sensiblement entre deux volets. Le mécanisme d'entraînement pourra alors entraîner deux volets adjacents, ce qui réduit le nombre total de systèmes d'entraînement. Par ailleurs, dans une telle configuration, il n'est plus nécessaire de prévoir un logement au milieu du volet et l'intégrité structurelle dudit volet est conservée.

La présente invention se rapporte également à une nacelle de turboréacteur à double flux comprenant un dispositif d'inversion de poussée selon invention.

La présente invention sera mieux comprise à la lumière de la description détaillée qui suit en regard du dessin annexé dans lequel :
- La figure 1 est une vue en coupe longitudinale d'un dispositif d'inversion de poussée selon un premier mode de réalisation de la présente invention et présentant un volet de blocage en position rétractée,
- La figure 2 est une vue en perspective partielle vue du dessus du dispositif d'inversion de poussée selon un premier mode de réalisation de la présente invention de la figure 1;
- La figure 3 est une vue similaire à la vue de la figure 2, le volet de blocage étant en position pivotée,
- Les figures 4 à 8 sont des figures schématiques montrant différentes étapes d'entraînement du volet de blocage.
- Les figures 9 et 10 sont des vues partielles en perspective vue de dessous du mode de réalisation de la figure 2.
- La figure 11 est une vue en perspective partielle vue du dessus du dispositif d'inversion de poussée selon un deuxième mode de réalisation de l'invention;

De manière connue en soi, un dispositif d'inversion de poussée désigné par la référence générale 10, est associé à un turboréacteur à double flux et appartient à une nacelle externe (non représentée) qui définit avec une structure interne 100 concentrique un canal annulaire d'écoulement ou veine V d'un flux secondaire du turboréacteur.

Tel qu'illustré schématiquement, le dispositif d'inversion de poussée 10 comprend un cadre avant fixe 1 prolongé par un capot 20 (partiellement représenté) monté coulissant grâce à des glissières, le long de l'axe longitudinal de la nacelle.

Le cadre avant 1 supporte une pluralité de grilles de déviation logées dans l'épaisseur du capot mobile 20, lorsque celui-ci est en position de fermeture.

La translation du capot mobile 20 vers l'aval de la nacelle dégage dans celle-ci une ouverture à travers laquelle le flux secondaire du turboréacteur peut s'échapper au moins partiellement, cette portion de flux étant réorientée vers l'avant de la nacelle par les grilles de déviation, générant de ce fait une contre-poussée apte à aider au freinage de l'avion.

Afin d'augmenter la portion de flux secondaire traversant les grilles, le dispositif d'inversion de poussée 10 comprend une pluralité de volets de blocage 30, répartis sur la circonférence du capot 20, et montés chacun pivotant par une extrémité autour d'un axe d'articulation 31, sur le capot coulissant 20 entre une position rétractée dans laquelle le volet 30 ferme l'ouverture et assure la continuité aérodynamique intérieure de la veine V et une position déployée dans laquelle, en situation d'inversion de poussée, il obture au moins partiellement la veine V en vue de dévier un flux de gaz vers l'ouverture à grilles 2.

Afin de tenir compte de la réduction de la circonférence de la veine entre leur position rétractée (circonférence maximale éloignée du centre) et leur position pivotée (circonférence minimale proche du centre), les volets 30 présentent une forme sensiblement trapézoïdale. Des intervolets 31 assure la jonction aérodynamique lorsqu'en position rétractée.

Lors du fonctionnement du turboréacteur en poussée directe, le capot coulissant 20 forme tout ou partie d'une partie aval de la nacelle, les volets 30 étant alors rétractés dans le capot coulissant 20 qui obture l'ouverture à grilles.

Pour inverser la poussée du turboréacteur, le capot coulissant 20 est déplacé en position aval et les volets 30 pivotent en position d'obturation de manière à dévier le flux secondaire vers les grilles et à former un flux inversé guidé par les grilles.

Il est à noter que dans le mode de réalisation illustré sur les figures, le pivotement du volet 30 autour de son axe d'articulation transversal à l'axe longitudinal de la nacelle, est assuré grâce à de liaisons rotules, à son extrémité amont. Il est bien évidemment possible de réaliser une articulation du volet 30 en aval dans la veine V, par son extrémité aval.

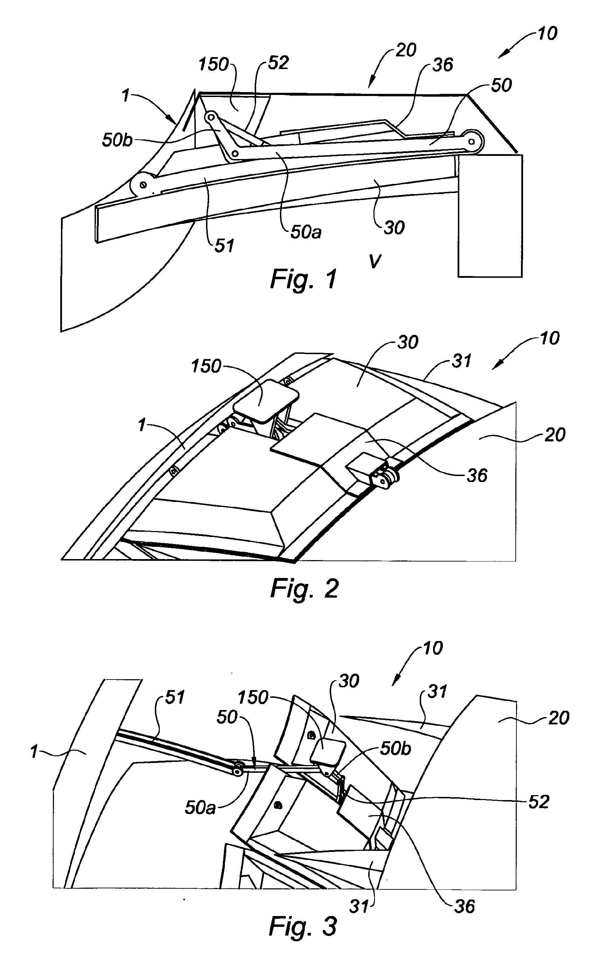

En référence aux figures 1 à 11, les volets 30 du dispositif d'inversion de poussée 10 sont équipé d'un système d'entraînement permettant le pivotement desdits volets 30 par rapport au capot 20 selon une cinématique appropriée.

Pour ce faire, et selon l'invention, le système d'entrainement du volet 30 comprend au moins un ensemble formant levier 50 monté pivotant par l'intermédiaire d'un pivot 150 sur le capot 20 mobile et articulé à chacune de ses extrémités, par l'intermédiaire respectivement d'une première bielle 51 et d'une deuxième bielle 52, d'entraînement, respectivement sur la structure fixe du dispositif, à savoir le cadre avant 1, et sur le volet 30.

Selon l'invention toujours, l'ensemble formant levier 50 et les bielles 51, 52 sont articulés dans un plan sensiblement perpendiculaire au volet et sensiblement radial du dispositif d'inversion de poussée.

Un tel système d'entraînement 40 permet de transformer le mouvement de translation du capot 20 vers l'aval de la nacelle (et de façon réversible, vers l'amont de la nacelle) en un mouvement de rotation de l'ensemble formant levier 50, ce mouvement de rotation étant ensuite renvoyé pour actionner la ou les bielles d'entraînement de manière à faire pivoter le volet 30 dans une position particulière telle que sa position déployée, sa position rétractée ou toute position dite de transit entre les deux positions précitées.

Plus précisément, l'ensemble formant levier 50 comprend deux bras de levier 50a et 50b distincts formant une forme générale de V dont la pointe est montée pivotante autour d'un axe de pivot perpendiculaire au plan contenant l'axe d'articulation du volet 30 et parallèle à l'axe longitudinal de la nacelle, grâce à une ferrure d'articulation 150 solidaire du capot 20, et plus précisément reliée à un diaphragme d'étanchéité équipant ledit capot 20. Dans la suite de la description, ce plan sera désigné comme le plan P.

Le premier bras de levier 50a est fixé au cadre avant 1 par l'intermédiaire de la première bielle 51 articulée autour d'un axe parallèle à l'axe d'articulation du volet 30.

Le second bras de levier 50b est fixé, quant à lui, par une première liaison rotulée, à une extrémité de la seconde bielle 52 reliée, à une extrémité opposée, par une seconde liaison rotulée, à l'extrémité aval du volet d'inversion 30.

Ainsi, la première bielle 51, le levier 50 et la seconde bielle 52 appartiennent bien à un même plan d'articulation sensiblement perpendiculaire au plan du volet 30.

En outre, en prévoyant que le levier 50 et les bielles 51, 52 sont disposés dans ce même plan sensiblement normal au volet, l'encombrement du système d'entraînement 40 peut être réduit au minimum lorsque ledit système d'entraînement est en position de volet 30 replié. Plus précisément, on pourra prévoir que le levier 50 et les bielles 51, 52 se replient en s'imbriquant en tout ou partie les unes dans les autres. Il est également possible de prévoir de loger ainsi les systèmes d'entraînement 40 dans l'épaisseur du volet 30.

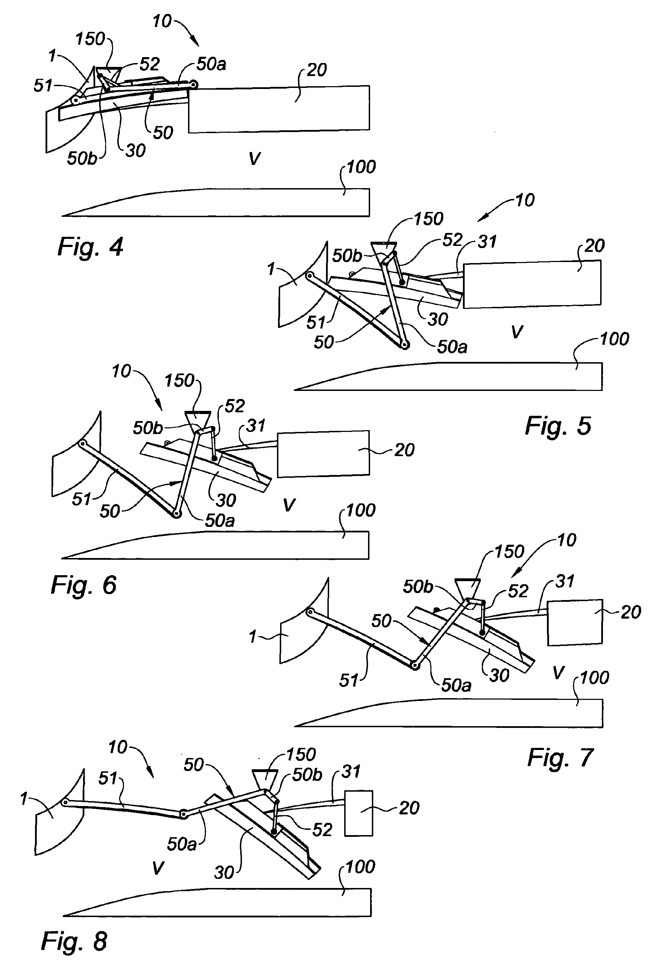

Les figures 4 à 8 montrent différentes étapes de déploiement du volet 30 depuis sa position repliée correspondant à une position en jet direct (figure 4) à sa position pivotée correspondant à une position d'inversion de poussée (figure 8).

Comme visible en position pivotée sur la figure 8, il est avantageux dans le cadre de l'invention que lorsque le dispositif d'inversion de poussée 10 est en position d'ouverture et le volet 30 en position pivotée de blocage, le levier 50 forme avec la bielle d'entraînement 51 rattachée à la structure fixe 1 du dispositif, un angle sensiblement égal à 160 degrés.

Cela est notamment obtenu en prévoyant que le levier 50, et plus précisément sa première branche 50a possède une longueur sensiblement égale à la moitié de la course de déplacement du capot mobile 20 entre sa position de fermeture et sa position d'ouverture. La marge de tolérance sera préférentiellement comprise entre 5 et 10 mm.

Cette caractéristique permet d'obtenir la rotation la plus importante possible pour le levier 50 tout en conservant une rotation lente du volet 30 de manière à garantir une constance de la surface totale d'écoulement des flux d'air direct et inversé tout au long du déploiement du capot mobile 20 et du volet 30. Plus précisément, le rapport de la surface totale d'écoulement (flux direct et flux inverse) en cours de déplacement du capot mobile et pivotement du volet 30 sur la surface d'écoulement en jet direct (inverseur de poussée fermé) reste proche de l'unité.

Une telle configuration permet toutefois de conserver une marge de sécurité quant à l'alignement entre la première bielle 51 et le levier 50. En effet, si la première bielle 51 et le levier 50 venaient en alignement quasi parfait, le mécanisme d'entraînement 40 serait alors dans une position instable susceptible d'interdire la refermeture du volet à l'issue de la phase d'inversion de poussée.

Bien évidemment, en fonction des longueurs des bielles 51, 52 et de la position des points d'articulation associé, notamment celui du levier 50, il est possible de contrôler de manière très précise la cinématique de pivotement du volet. En fonction du dispositif d'inversion de poussée et du turboréacteur associés, il est ainsi possible, par exemple, de mettre en oeuvre un volet à pivotement progressif en début de phase d'inversion de poussée, lorsque le flux d'air inversé est encore relativement faible. Cela permettra de conserver un débit d'air total compris entre 0.95 et 1.25 fois le débit d'air en fonction normal (jet direct) du turboréacteur.

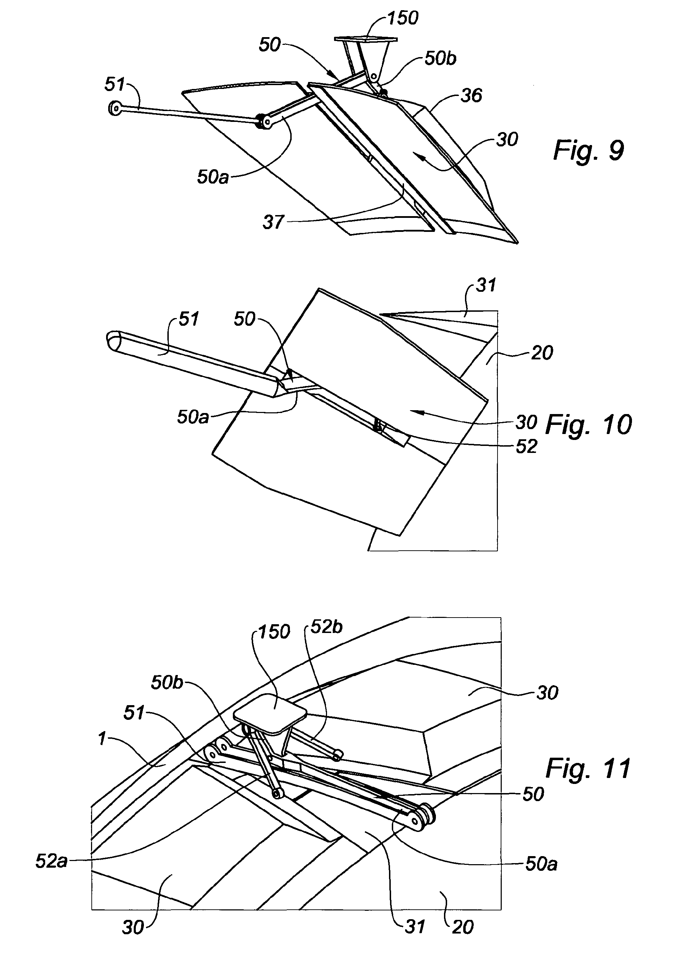

Selon un premier mode de réalisation plus particulièrement représenté sur les figures 9 et 10, le système d'entraînement 40 est situé dans un plan sensiblement médian du volet 30.

Avantageusement le système d'entraînement sera logé, en tout ou partie, en position repliée dans l'épaisseur du volet 30. Dans une telle configuration, le volet 30 est alors sensiblement coupé en deux demi-volets par le logement du système d'entraînement. Il peut alors être nécessaire de prévoir un renforcement structurel du volet 30, notamment sous la forme d'un pont 36 reliant les deux demi-volets.

Selon une première variante (figure 9), le système d'entraînement est totalement logé dans l'épaisseur du volet 30 et le logement du système d'entraînement dans le volet 30 est équipé d'un système de clapet articulé 37 qui, lorsque le volet 30 est en position rétractée, assure le carénage de la surface aérodynamique dudit volet en jet direct. Ce clapet 37 pourra être maintenu automatiquement en position fermée à l'aide d'un système élastique. Lors du pivotement du volet 30, le levier 50 force le clapet en ouverture directement ou par l'intermédiaire d'un mécanisme.

Cette variante de réalisation permet de réaliser la première bielle 51 avec une section sensiblement tubulaire, ce qui limite l'obstruction de la surface des grilles d'inversion de poussée par cette bielle 51 en mode d'inversion de poussée. Le flux d'air inversé s'écoulant plus facilement autour d'une bielle tubulaire.

Cette variante permet également d'améliorer la gestion des marches et écarts au milieu du volet. La reconstitution de la surface aérodynamique du volet 30 par le clapet peut être optimisée et très précise en décorélant la position du clapet de la position de la première bielle 51 repliée.

En revanche, en position pivotée, le clapet 37 sera exposé au flux d'air inversé. Il convient donc de prévoir un renforcement approprié de sa structure.

Selon une deuxième variante (figure 10), la première bielle 51 pourra être simplement repliée dans la veine le long du volet 30.

Dans une telle configuration, en position repliée en jet direct, la première bielle 51 vient dans le flux le long du volet 30. Elle sera alors avantageusement profilée afin de limiter les pertes aérodynamiques associées.

Cette variante permet de conserver l'intégrité structurale du volet, le logement prévu au milieu du volet étant simplement destiné à permettre le passage du levier 50. Ce logement est donc moins long et ne parcourt notamment pas toute la longueur du volet. Il n'est plus nécessaire de prévoir un pont de renforcement. Il s'ensuit un gain évident de masse sur le volet 30, mais également un gain de surface acoustique grâce à la suppression de zones de fixation du pont de renfort sur les demi-volets.

Selon un deuxième mode de réalisation, représenté schématiquement à la figure 11, le mécanisme d'entraînement est situé sensiblement entre deux volets 30.

Ainsi, un même mécanisme d'entraînement pourra entraîner deux volets. Pour ce faire, on pourra notamment prévoir que la deuxième bielle 52 est réalisée sous la forme de deux biellettes 52a, 52b liée chacune à un volet 30.

Il s'ensuit un gain de masse non négligeable puisque le nombre de systèmes d'entraînement peut être réduit de moitié.

Par ailleurs, la structure des volets 30 n'est pas atteinte, et il n'est pas nécessaire de les renforcer. La surface acoustique est également optimale puisque les volets ne sont plus coupés en deux.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif d'inversion de poussée (10) pour nacelle de turboréacteur comprenant au moins un capot (20) monté mobile en translation selon une direction sensiblement parallèle à un axe longitudinal de la nacelle entre une position de fermeture dans laquelle il assure la continuité aérodynamique de la nacelle et couvre des moyens de déviation d'au moins une partie d'un flux d'air du turboréacteur, et une position d'ouverture dans laquelle il ouvre un passage dans la nacelle et découvre lesdits moyens de déviation, le capot mobile étant associé à au moins un volet (30) de blocage monté pivotant par une extrémité sur le capot mobile entre une position rétractée correspondant à la position de fermeture dudit capot mobile et une position pivotée de blocage correspondant à la position d'ouverture du capot mobile et dans laquelle il vient obturer au moins partiellement une veine de circulation d'air de la nacelle, le volet de blocage étant équipé d'au moins un mécanisme d'entraînement comprenant au moins un ensemble formant levier (50) monté pivotant sur le capot (20) et articulé à chacune de ses extrémités, par l'intermédiaire de bielles d'entraînement (51, 52), respectivement sur le volet (30) et sur une structure fixe (1) du dispositif, **caractérisé en ce que** l'ensemble formant levier et les bielles associées sont articulées dans un plan sensiblement perpendiculaire au volet et sensiblement radial du dispositif d'inversion de poussée.

2. Dispositif (10) selon la revendication 1, **caractérisé en ce que** l'ensemble formant levier (50) comprend un premier et un second bras de levier (51,52), chacun respectivement fixé, par l'intermédiaire de bielles d'entraînement, sur un cadre avant (1) et sur le volet (30) et montés pivotant sur le capot (20).

3. Dispositif (10) selon l'une quelconque des revendications 1 ou 2, **caractérisé en ce que** lorsque le dispositif d'inversion de poussée (10) est en position d'ouverture et le volet (30) en position pivotée de blocage, le levier (50) forme avec la bielle d'entraînement (51) rattachée à la structure fixe du dispositif, un angle sensiblement égal à 160 degrés.

4. Dispositif (10) selon la revendication 3, **caractérisé en ce que** l'angle est obtenu en prévoyant une longueur de levier (50) sensiblement égale à la moitié de la course du capot mobile (20) entre sa position de fermeture et sa position d'ouverture.

5. Dispositif (10) selon la revendication 4, **caractérisé en ce que** la tolérance de longueur de levier (50) est comprise entre 5 et 10 mm.

6. Dispositif (10) selon l'une des revendications 1 à 5, **caractérisé en ce que** au moins une partie des éléments de levier (50) et bielles (51, 52) du mécanisme d'entraînement sont aptes à s'imbriquer les uns dans les autres lorsque le volet (30) est en position rétractée.

7. Dispositif (10) selon l'une quelconque des revendications 1 à 6, **caractérisé en ce que** le plan d'articulation du mécanisme d'entrainement comprend un axe médian du volet (30).

8. Dispositif (10) selon la revendication 7, **caractérisé en ce que** lorsque le volet (30) est en position rétractée, le mécanisme d'entraînement est replié et logé sensiblement dans le plan du volet au niveau de l'axe médian dudit volet.

9. Dispositif (10) selon l'une quelconque des revendications 1 à 6, **caractérisé en ce que** le mécanisme d'entraînement est situé sensiblement entre deux volets (30).

10. Nacelle de turboréacteur à double flux comprenant un dispositif d'inversion de poussée (10) selon l'une des revendications 1 à 9.

## Patentansprüche

1. Schubumkehrvorrichtung (10) für eine Turbostrahltriebwerksgondel, zumindest eine Triebwerksverkleidung (20) umfassend, die montiert ist, um sich translatorisch in eine Richtung, die im Wesentlichen parallel zu einer Längsachse der Gondel verläuft, zwischen einer Schließposition, in der sie die aerodynamische Kontinuität der Gondel gewährleistet und Mittel zum Umleiten zumindest eines Teils eines Luftstroms des Turbostrahltriebwerks abdeckt, und einer Öffnungsposition zu bewegen, in der sie einen Durchlass in der Gondel öffnet und die besagten Umleitmittel freigibt, wobei die bewegliche Triebwerksverkleidung mit zumindest einer Sperrklappe (30) verbunden ist, die schwenkbar an einem Ende auf der beweglichen Triebwerksverkleidung zwischen einer eingezogenen, die der Schließposition der besagten beweglichen Triebwerksverkleidung, und einer geschwenkten Sperrposition montiert ist, die der Öffnungsposition der beweglichen Triebwerksverkleidung entspricht, und in der sie zumindest teilweise einen Luftstromkanal der Gondel schließt, wobei die Sperrklappe mit zumindest einem Antriebsmechanismus ausgestattet ist, der zumindest eine Baugruppe umfasst, die einen Hebelarm (50) bildet, der schwenkbar auf der Triebwerksverkleidung (20) montiert ist und an jedem seiner Enden durch Treibglieder (51, 52) jeweils an der Klappe (30) und an einer befestigten Struktur (1) der Vorrichtung frei beweglich ist, **dadurch gekennzeichnet, dass** die einen Hebel bildende Baugruppe und die zugehörigen Glieder in einer Ebene frei beweglich sind, die im Wesentlichen senkrecht zur Klappe und im Wesentlichen radial zur Schubumkehrvorrichtung verläuft.

2. Vorrichtung (10) nach Anspruch 1, **dadurch gekennzeichnet, dass** die einen Hebel (50) bildende Baugruppe einen ersten und einen zweiten Hebelarm (51, 52) umfasst, von denen jeder jeweils über Treibglieder an einem Frontrahmen (1) und an der Klappe (30) befestigt, und schwenkbar auf der Triebwerksverkleidung (20) montiert ist.

3. Vorrichtung (10) nach irgendeinem der Ansprüche 1 oder 2, **dadurch gekennzeichnet, dass** der Hebel (50), wenn sich die Schubumkehrvorrichtung (10) in einer Öffnungsposition, und die Klappe (30) in einer geschwenkten Sperrposition befindet, mit dem Treibglied (51), das mit der befestigten Struktur der Vorrichtung verbunden ist, einen Winkel bildet, der im Wesentlichen gleich 160 Grad ist.

4. Vorrichtung (10) nach Anspruch 3, **dadurch gekennzeichnet, dass** man den Winkel durch die Beistellung für eine Hebellänge (50) im Wesentlichen gleich der Hälfte des Hubs der beweglichen Triebwerksverkleidung (20) zwischen ihrer Schließposition und ihrer Öffnungsposition erhält.

5. Vorrichtung (10) nach Anspruch 4, **dadurch gekennzeichnet, dass** die Toleranz für die Länge des Hebels (50) zwischen 5 und 10 mm beträgt.

6. Vorrichtung (10) nach irgendeinem der Ansprüche 1 bis 5, **dadurch gekennzeichnet, dass** sich zumindest ein Teil der Hebelelemente (50) und Glieder (51, 52) des Antriebsmechanismus dazu eignen, sich jeweils ineinander zu verschachteln, wenn sich die Klappe (30) in einer eingezogenen Position befindet.

7. Vorrichtung (10) nach irgendeinem der Ansprüche 1 bis 6, **dadurch gekennzeichnet, dass** die Artikulationsebene des Antriebsmechanismus eine Mittelachse der Klappe (30) einschließt.

8. Vorrichtung (10) nach Anspruch 7, **dadurch gekennzeichnet, dass** der Antriebsmechanismus, wenn sich die Klappe (30) in einer eingezogenen Position befindet, eingeklappt, und im Wesentlichen in der Ebene der Klappe an der Mittelachse der besagten Klappe untergebracht wird.

9. Vorrichtung (10) nach irgendeinem der Ansprüche 1 bis 6, **dadurch gekennzeichnet, dass** der Antriebsmechanismus im Wesentlichen zwischen zwei Klappen (30) angeordnet ist.

10. Gondel eines Turbinentriebwerks, eine Schubumkehrvorrichtung (10) nach irgendeinem der Ansprüche 1 bis 9 umfassend.

## Claims

1. A thrust reverser device (10) for a turbojet engine nacelle comprising at least one cowl (20) mounted so as to move in a translational manner in a direction substantially parallel to a longitudinal axis of the nacelle between a closed position in which it ensures the aerodynamic continuity of the nacelle and covers means for diverting at least part of an air flow of the turbojet engine, and an opened position in which it opens a passage in the nacelle and uncovers said diverting means, the movable cowl being associated with at least one blocking flap (30) pivotally mounted by one end on the movable cowl between a retracted position corresponding to the closed position of said movable cowl and a pivoted blocking position corresponding to the opened position of the movable cowl and in which it obstructs at least partially an air flow path of the nacelle, the blocking flap being equipped with at least one driving mechanism comprising at least one assembly forming a lever (50) pivotally mounted on the cowl (20) and hinged at each of the ends thereof, by means of driving rods (51, 52), respectively on the flap (30) and on a fixed structure (1) of the device, **characterized in that** the assembly forming a lever and the associated rods are hinged in a plane substantially perpendicular to the flap and substantially radial of the thrust reverser device.

2. The device (10) according to claim 1, **characterized in that** the assembly forming a lever (50) comprises a first and a second lever arms (51, 52), each respectively fixed, by means of driving rods, on a front frame (1) and on the flap (30) and pivotally mounted on the cowl (20).

3. The device (10) according to any one of claims 1 or 2, **characterized in that**, when the thrust reverser device (10) is in an opened position and the flap (30) in a pivoted blocking position, the lever (50) forms with the driving rod (51) fastened to the fixed structure of the device, an angle substantially equal to 160 degrees.

4. The device 10) according to claim 3, **characterized in that** the angle is obtained by providing for a lever (50) length substantially equal to half the stroke of the movable cowl (20) between its closed position and its opened position.

5. The device (10) according to claim 4, **characterized in that** the lever (50) length tolerance ranges between 5 and 10 mm.

6. The device (10) according to any of claims 1 to 5, **characterized in that** at least part of the lever elements (50) and rods (51, 52) of the driving mechanism are adapted to imbricate into each other when the flap (30) is in a retracted position.

7. The device (10) according to any one of claims 1 to 6, **characterized in that** the hinge plane of the driving mechanism comprises a center axis of the flap (30).

8. The device (10) according to claim 7, **characterized in that** when the flap (30) is in the retracted position, the driving mechanism is folded and housed substantially in the plane of the flap at the center axis of said flap.

9. The device (10) according to any one of claims 1 to 6, **characterized in that** the driving mechanism is substantially located between two flaps (30).

10. A nacelle of a bypass turbojet engine comprising a thrust reverser device (10) according to any of claims 1 to 9.
